# FASCICULE DE BREVET EUROPEEN

(11) **EP 3 593 681 B1**
(45) Date de publication et mention de la délivrance du brevet: **26.04.2023**
(21) Numéro de dépôt: 19184343.2
(22) Date de dépôt: 04.07.2019
(51) Int. Cl.: A47J 36/02, A47J 27/00, A47J 37/10

(54) **RECIPIENT DE CUISSON COMPATIBLE INDUCTION COMPORTANT UNE PLAQUE DE FOND AMELIORÉE**
INDUKTIONFÄHIGES KOCHGEFÄSS MIT EINER VERBESSERTEN BODENPLATTE
COOKING VESSEL SUITABLE FOR INDUCTION COMPRISING AN IMPROVED BOTTOM PLATE

(30) Priorité: 11.07.2018 FR 1856364
(43) Date de publication de la demande: 15.01.2020
(73) Titulaire: SEB S.A., 69130 Ecully (FR)
(72) Inventeur: BEZZI, Sassi, 74600 SEYNOD (FR)
(74) Mandataire: SEB Développement

(56) Documents cités:
- WO-A1-2012/153317
- FR-A1- 2 915 359
- FR-A1- 2 919 484

## Description

La présente invention concerne un récipient de cuisson destiné à être disposé horizontalement sur un appareil de chauffage, notamment un appareil de chauffage par induction pour la cuisson d'aliments, notamment une poêle, une casserole, une sauteuse, un faitout ou un autocuiseur.

On connaît du document FR2915359 un récipient de cuisson réalisé à partir d'une feuille de métal ou d'alliage léger, comportant une paroi latérale et un fond destiné à être disposé horizontalement sur un appareil de chauffage, notamment un appareil de chauffage par induction. Le fond reçoit une plaque réalisée en un métal ou alliage ferromagnétique ayant des propriétés mécaniques, thermiques, physiques différentes et notamment une limite élastique plus élevée que celle du métal ou alliage de ladite feuille. La plaque comprend des perforations d'accroche et est encastrée dans le fond de manière à ce que les perforations d'accroche soient remplies de matière de la feuille. La plaque comporte une zone de portée périphérique continûment pleine, en forme de couronne qui se termine par un rebord périphérique relevé qui s'étend vers la feuille.

Le rebord périphérique comprend une extrémité qui est encastrée dans le fond. Ainsi, le fond continue à s'étendre radialement à partir du rebord périphérique avant de se raccorder à la paroi latérale par une partie courbe. Cette extension en forme de couronne, sensiblement horizontale, n'est pas recouverte par la plaque ferromagnétique et ne participe donc pas «activement» à la chauffe lorsque le fond repose sur un appareil de chauffage par induction.

De plus, cette extension en forme de couronne doit faire l'objet d'une opération de finition par reprise d'usinage ou brossage.

Le but de la présente invention est de remédier aux inconvénients précités et de proposer un récipient de cuisson compatible avec un appareil de chauffage par induction qui présente des performances de chauffe optimisées.

Un autre but de l'invention est de proposer un récipient de cuisson de conception simple et économique à mettre en oeuvre.

Ces buts sont atteints avec un récipient de cuisson réalisé à partir d'une feuille de métal ou d'alliage léger, comportant une paroi latérale et un fond destiné à être disposé horizontalement sur un appareil de chauffage, notamment un appareil de chauffage par induction, ledit fond recevant une plaque réalisée en un métal ou alliage ferromagnétique ayant des propriétés mécaniques, thermiques, physiques différentes et notamment une limite élastique plus élevée que celle du métal ou alliage de ladite feuille, ladite plaque comprenant des perforations d'accroche et étant encastrée dans ledit fond de manière à ce que les perforations d'accroche soient remplies de matière de la feuille, ladite plaque comportant une zone de portée périphérique continûment pleine, en forme de couronne qui s'étend radialement sur une largeur L et qui se termine par un rebord périphérique relevé qui s'étend vers la feuille, caractérisé en ce que le fond est raccordé à la paroi latérale par une partie courbe qui s'étend vers le haut directement à partir du rebord périphérique et en ce que la plaque présente un rayon R1, le rapport L/R1 étant supérieur à 0,08, de préférence supérieur à 0,1.

Ainsi, la plaque s'étend sur toute une face plane du fond. En conséquence, la puissance de chauffe de l'appareil de chauffage par induction qui passe par la plaque est répartie sur l'intégralité du fond. Le récipient de cuisson présente donc des performances de chauffe améliorées.

La zone de portée périphérique continûment pleine est une zone de contact privilégiée du récipient de cuisson sur l'appareil de chauffage par induction qui comporte une plaque en verre. Telle que définie, la zone de portée périphérique est suffisamment large pour éviter des rayures sur la plaque en verre lors des frottements générés par les manipulations du récipient de cuisson sur l'appareil de chauffage.

Le maintien en position de la zone de portée périphérique continûment pleine contre la feuille de métal ou d'alliage léger lors des chauffe et refroidissement successifs est assuré par le rebord périphérique relevé.

Par rebord périphérique, on comprend que le rebord s'étend sur tout le périmètre de la plaque.

Par le fond est raccordé à la paroi latérale par une partie courbe qui s'étend vers le haut directement à partir du rebord périphérique, on comprend que la partie courbe comporte une face externe qui s'étend vers le haut à partir de l'arête externe du rebord périphérique ou de son voisinage immédiat.

De préférence, le rebord périphérique est continu et régulier sur tout un périmètre de la plaque.

Ainsi, le rebord périphérique relevé bloque de manière efficace les déformations de la zone de portée périphérique continûment pleine pour la maintenir contre la feuille de métal ou d'alliage léger.

Avantageusement, le rebord périphérique forme un angle α avec une droite perpendiculaire à la plaque, l'angle α étant inférieur à 45°, de préférence inférieur à 30° pour qu'une extrémité libre du rebord périphérique forme une pointe qui est encastrée dans la feuille.

Ainsi, l'extrémité libre du rebord périphérique forme une pointe qui est encastrée dans la feuille de métal ou d'alliage léger pour garantir le maintien en position de la zone de portée périphérique continûment pleine

De préférence, l'extrémité libre du rebord périphérique comporte une arête externe, la partie courbe comprenant une face externe qui s'étend directement à partir de ladite arête externe.

Par arête externe, on comprend que l'arête forme une ligne qui s'étend sur tout le pourtour extérieur de la plaque.

Avantageusement, le rebord périphérique s'étend vers le haut à partir d'une face supérieure de la plaque sur une hauteur H supérieure à 0,2 mm, de préférence supérieure à 0,5 mm.

De préférence, la plaque comporte une face inférieure délimitée par le rebord périphérique et qui présente une surface S1 ; et le fond comporte une face supérieure plane de réception des aliments présentant une surface S2, le rapport S1/S2 étant supérieur à 0,95, de préférence supérieur à 0,98.

Ainsi, la plaque s'étend en vis-à-vis de quasiment toute la face supérieure plane de réception des aliments. En conséquence, la puissance de chauffe de l'appareil de chauffage par induction qui passe par la plaque est transmise à quasiment l'intégralité de la face plane de dépose des aliments.

De préférence, le récipient de cuisson est une poêle, une casserole, une sauteuse, un faitout ou un autocuiseur.

L'invention sera mieux comprise à l'étude du mode de réalisation pris à titre nullement limitatif et illustré dans les figures annexées dans lesquelles :
- la figure 1 illustre une vue en perspective d'un récipient de cuisson selon un mode particulier de réalisation de l'invention,
- la figure 2 illustre une vue en coupe suivant une ligne II du récipient de cuisson illustré à la figure 1,
- la figure 3 illustre une vue de détail III du récipient de cuisson illustré à la figure 2,
- la figure 4 illustre une vue de détail IV du récipient de cuisson de la figure 3.

On notera que, dans ce document, les termes «horizontal», «vertical», «inférieur», «supérieur», «longitudinal», «transversal», «haut», «bas», employés pour décrire le récipient de cuisson font référence à ce récipient de cuisson en situation d'usage, lorsqu'il est posé sur un plan horizontal, notamment un appareil de chauffage.

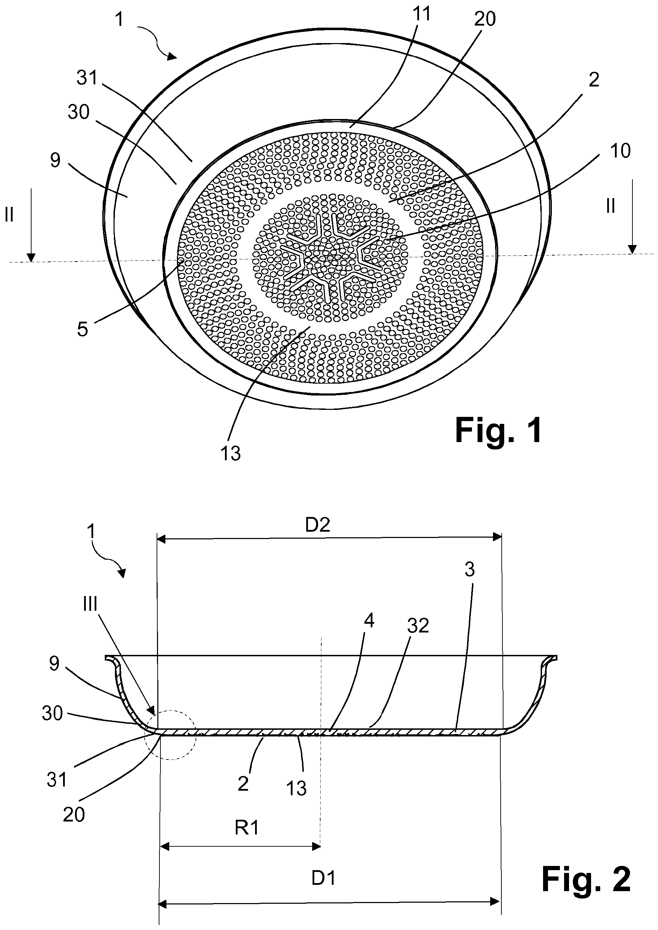

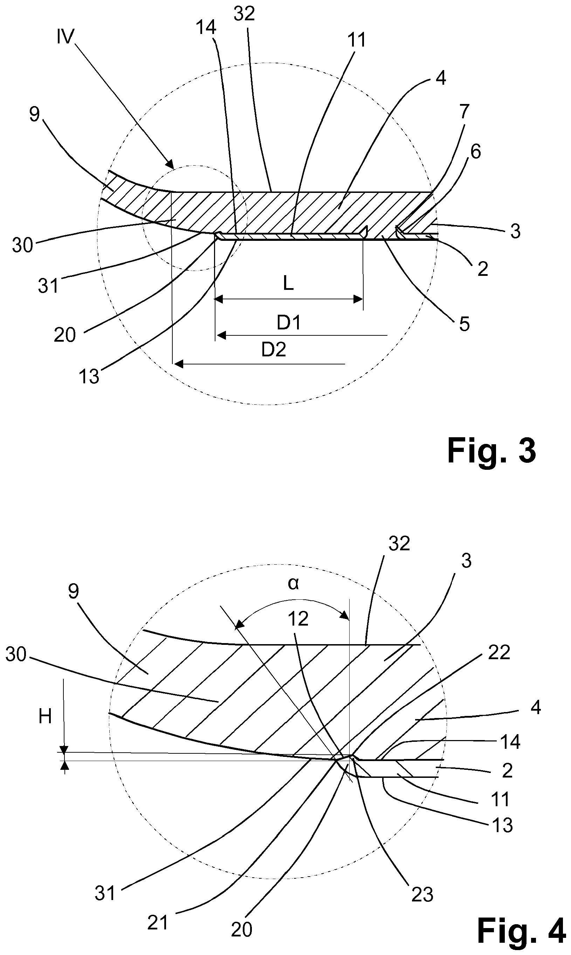

Selon un mode de réalisation visible aux figures 1 et 4, un récipient de cuisson 1 est constitué par une poêle. La poêle comporte un fond 4 et une paroi latérale 9. Une poignée de préhension non représentée sur les figures est attachée à la paroi latérale 9. Le récipient de cuisson 1 est réalisé à partir d'une feuille 3 en métal ou alliage léger, tel que de l'aluminium, en forme de disque. Ce disque est embouti d'une manière bien connue par l'homme du métier, pour former le récipient de cuisson 1. De préférence, le disque est en aluminium d'épaisseur comprise entre 2 et 6 mm.

Le fond 4 reçoit une plaque 2 en métal ou alliage ayant des propriétés différentes du métal ou alliage de la feuille 3, notamment dont la limite élastique est significativement plus élevée que celle de l'aluminium. La plaque 2 est, comme on le voit sur les figures 3 et 4, encastrée dans le métal de la feuille 3. La plaque 2 est réalisée en un matériau ferromagnétique pour que le récipient de cuisson 1 soit compatible avec un appareil de chauffage par induction. La plaque 2 agencée sur le fond 4 est destinée à être disposé sur un appareil de chauffage.

La plaque 2 a la forme d'un disque pour s'adapter à la forme circulaire du fond 4. La plaque 2 comporte une zone centrale 10 entourée d'une zone de portée 11 périphérique, par laquelle le récipient de cuisson 1 peut prendre appui sur un support formé notamment par une plaque en verre de l'appareil de chauffage par induction. La zone de portée 11 est continûment pleine (c'est-à-dire ici sans perforation) et en forme de couronne. La zone de portée 11 périphérique continûment pleine s'étend radialement sur une largeur L et la plaque 2 présente un rayon R1 (Fig.2). Le rapport L/R1 étant supérieur à 0,08, de préférence supérieur à 0,1. De manière avantageuse, la zone centrale 10 est très légèrement concave pour favoriser l'appui de la zone de portée 11 du récipient de cuisson 1 sur le support.

La zone centrale 10 de la plaque 2 est traversée de part en part par des perforations 5. Ces perforations 5 sont réparties régulièrement ou non, en une ou plusieurs zones, typiquement suivant plusieurs rayons qui peuvent être concentriques et débuter près du centre de la plaque 2 (Fig.1). Tel que visible à la figure 3, chaque perforation 5 présente une lèvre 6 périphérique inclinée et une extrémité 7 de lèvre. On applique la plaque 2 perforée ainsi façonnée sur la feuille 3 de métal, les lèvres 6 périphériques des perforations 5 formant des proéminences dirigées vers la feuille de métal. La plaque 2 est encastrée dans la feuille 3 par frappe à froid, comme décrit dans le document FR2693894. Lors de la frappe, le redressement des lèvres 6 périphériques et des extrémités 7 de lèvre, associé au fluage de matière de la feuille 3 de métal dans les perforations 5 réalise un ancrage de la plaque 2 sur la feuille 3.

Conformément aux figures 3 et 4, la plaque 2 comporte un rebord périphérique 20 continu et régulier qui entoure extérieurement la zone de portée 11. Le rebord périphérique 20 est réalisé par pliage de la plaque 2. De manière avantageuse, le rayon de pliage est inférieur à deux millimètres pour que le rebord périphérique 20 rigidifie la zone de portée 11. Le rebord périphérique 20 forme un angle α inférieur à 45° avec une droite perpendiculaire à la plaque 2 (Fig.4) Ainsi, un chant 12 de la plaque 2 est incliné par rapport au fond 4 et définit une arête externe 21 avec une face inférieure 13 de la plaque et une arête interne 22 avec une face supérieure 14 de la plaque 2. Une extrémité libre du rebord périphérique 20 forme ainsi une pointe 23 qui est encastrée dans la feuille 3 de métal. Le rebord périphérique 20, notamment la pointe 23, s'étend vers le haut à partir d'une face supérieure 14 de la plaque 2 sur une hauteur H égale à 0,4 mm.

Tel que visible aux figures 2 à 4, le fond 4 est raccordé directement à la paroi latérale 9 par une partie courbe 30 qui s'étend vers le haut directement à partir du rebord périphérique 20. La partie courbe 30 comporte une face externe 31 qui s'étend vers le haut à partir de l'arête externe 21 du rebord périphérique 20 ou de son voisinage immédiat.

La face inférieure 13 de la plaque 2, délimitée par le rebord périphérique 20, présente une surface S1. Le fond 4 comporte une face supérieure plane 32 de réception des aliments présentant une surface S2. Le rapport S1/S2 est supérieur à 0,95 ; de préférence supérieur à 0,98. A titre d'exemple, pour une poêle de diamètre 28 centimètres, la plaque 2 présente un diamètre D1 égal à 225 mm et la face inférieure 13 présente une surface S1 égale à 39 760 mm² (Fig.3). La face supérieure plane 32 présente un diamètre D2 égal à 229 mm et une surface S2 égale à 41 187 mm². Le rapport S1/S2 est égal à 0,97.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention telle que définie par les revendications.

Dans une autre variante de réalisation, la plaque pourrait avoir une forme polygonale pour s'adapter à la forme polygonale du fond.

## Revendications

1. Récipient de cuisson (1) réalisé à partir d'une feuille (3) de métal ou d'alliage léger, comportant une paroi latérale (9) et un fond (4) destiné à être disposé horizontalement sur un appareil de chauffage, notamment un appareil de chauffage par induction, ledit fond (4) recevant une plaque (2) réalisée en un métal ou alliage ferromagnétique ayant une limite élastique plus élevée que celle du métal ou alliage de ladite feuille (3), ladite plaque (2) comprenant des perforations (5) d'accroche et étant encastrée dans ledit fond (4) de manière à ce que les perforations (5) d'accroche soient remplies de matière de la feuille (3), ladite plaque (2) comportant une zone de portée (11) périphérique continûment pleine, en forme de couronne qui s'étend radialement sur une largeur L et qui se termine par un rebord périphérique (20) relevé qui s'étend vers la feuille (3), **caractérisé en ce que** le fond (4) est raccordé à la paroi latérale (9) par une partie courbe (30) qui s'étend vers le haut directement à partir du rebord périphérique (20) et **en ce que** la plaque (2) présente un rayon R1, le rapport L/R1 étant supérieur à 0,08, de préférence supérieur à 0,1.

2. Récipient de cuisson (1) selon la revendication 1, **caractérisé en ce que** le rebord périphérique (20) est continu et régulier sur tout un périmètre de la plaque (2).

3. Récipient de cuisson (1) selon la revendication 2, **caractérisé en ce que** le rebord périphérique (20) forme un angle α avec une droite perpendiculaire à la plaque (2), l'angle α étant inférieur à 45°, de préférence inférieur à 30° pour qu'une extrémité libre du rebord périphérique (20) forme une pointe (23) qui est encastrée dans la feuille (3).

4. Récipient de cuisson (1) selon la revendication 3, **caractérisé en ce que** l'extrémité libre du rebord périphérique (20) comporte une arête externe (21), la partie courbe (30) comprenant une face externe (31) qui s'étend directement à partir de ladite arête externe (21).

5. Récipient de cuisson (1) selon l'une des revendications 1 à 4, **caractérisé en ce que** le rebord périphérique (20) s'étend vers le haut à partir d'une face supérieure (14) de la plaque (2) sur une hauteur H supérieure à 0,2 mm, de préférence supérieure à 0,5 mm.

6. Récipient de cuisson (1) selon l'une des revendications 1 à 5, **caractérisé en ce que** la plaque (2) comporte une face inférieure (13) délimitée par le rebord périphérique (20) et qui présente une surface S1 ; et **en ce que** le fond (4) comporte une face supérieure plane (32) de réception des aliments présentant une surface S2, le rapport S1/S2 étant supérieur à 0,95, de préférence supérieur à 0,98.

7. Récipient de cuisson (1) selon l'une des revendications 1 à 6, **caractérisé en ce qu'**il est une poêle, une casserole, une sauteuse, un faitout ou un autocuiseur.

## Patentansprüche

1. Kochgefäß (1), das aus einem Blech (3) aus Metall oder Leichtmetalllegierung hergestellt ist, umfassend eine Seitenwand (9) und einen Boden (4), der dazu bestimmt ist, horizontal auf einer Heizvorrichtung, insbesondere einer Induktionsheizvorrichtung, angeordnet zu werden, wobei der Boden (4) eine Platte (2) aufnimmt, die aus einem ferromagnetischen Metall oder einer ferromagnetischen Legierung hergestellt ist, das bzw. die eine höhere Streckgrenze als die des Metalls oder der Legierung des Blechs (3) aufweist, wobei die Platte (2) Einhängeperforationen (5) umfasst und so in den Boden (4) eingebettet ist, dass die Einhängeperforationen (5) mit Material des Blechs (3) gefüllt sind, wobei die Platte (2) einen durchgehend massiven, umlaufenden Auflagebereich (11) in Kranzform umfasst, der sich radial über eine Breite B erstreckt und der mit einem hochgezogenen umlaufenden Rand (20) endet, welcher sich zum Blech (3) hin erstreckt, **dadurch gekennzeichnet, dass** der Boden (4) über einen gekrümmten Teil (30), der sich direkt vom umlaufenden Rand (20) aus nach oben erstreckt, mit der Seitenwand (9) verbunden ist, und dadurch, dass die Platte (2) einen Radius R1 aufweist, wobei das Verhältnis B/R1 größer als 0,08, vorzugsweise größer als 0,1 ist.

2. Kochgefäß (1) nach Anspruch 1, **dadurch gekennzeichnet, dass** der umlaufende Rand (20) über einen gesamten Umfang der Platte (2) durchgehend und gleichmäßig ist.

3. Kochgefäß (1) nach Anspruch 2, **dadurch gekennzeichnet, dass** der umlaufende Rand (20) zu einer senkrecht zur Platte (2) stehenden Geraden einen Winkel α bildet, wobei der Winkel α kleiner als 45°, vorzugsweise kleiner als 30° ist, sodass ein freies Ende des umlaufenden Randes (20) eine Spitze (23) bildet, die in das Blech (3) eingebettet ist.

4. Kochgefäß (1) nach Anspruch 3, **dadurch gekennzeichnet, dass** das freie Ende des umlaufenden Randes (20) eine Außenkante (21) umfasst, wobei der gekrümmte Teil (30) eine Außenseite (31) umfasst, die sich direkt von der Außenkante (21) aus erstreckt.

5. Kochgefäß (1) nach einem der Ansprüche 1 bis 4, **dadurch gekennzeichnet, dass** sich der umlaufende Rand (20) von einer Oberseite (14) der Platte (2) aus über eine Höhe H von größer als 0,2 mm, vorzugsweise größer als 0,5 mm, nach oben erstreckt.

6. Kochgefäß (1) nach einem der Ansprüche 1 bis 5, **dadurch gekennzeichnet, dass** die Platte (2) eine Unterseite (13) umfasst, die von dem umlaufenden Rand (20) begrenzt wird und die eine Fläche F1 aufweist; und dadurch, dass der Boden (4) eine ebene Oberseite (32) zum Aufnehmen der Lebensmittel umfasst, die eine Fläche F2 aufweist, wobei das Verhältnis F1/F2 größer als 0,95, vorzugsweise größer als 0,98 ist.

7. Kochgefäß (1) nach einem der Ansprüche 1 bis 6, **dadurch gekennzeichnet, dass** es sich bei ihm um eine Pfanne, einen Stieltopf, eine Schmorpfanne, einen Kochtopf oder einen Schnellkochtopf handelt.

## Claims

1. Cooking vessel (1) made from a light metal or alloy sheet (3), comprising a side wall (9) and a bottom (4) intended to be arranged horizontally on a heating apparatus, in particular, an induction heating apparatus, said bottom (4) receiving a plate (2) made of a metal or a ferromagnetic alloy having a higher elastic limit than that of the metal or alloy of said sheet (3), said plate (2) comprising attaching perforations (5) and being embedded in said bottom (4) in such a way that the attaching perforations (5) are filled with material of the sheet (3), said plate (2) comprising a continuously full peripheral bearing area (11), in the form of a crown which extends radially over a width L and ends in a raised peripheral rim (20) which extends towards the sheet (3), **characterized in that** the bottom (4) is connected to the side wall (9) by a curved part (30) which extends upwards directly from the peripheral rim (20) and **in that** the plate (2) has a radius R1, the ratio L/R1 being greater than 0.08, preferably greater than 0.1.

2. Cooking vessel (1) according to claim 1, **characterized in that** the peripheral rim (20) is continuous and regular over an entire perimeter of the plate (2).

3. Cooking vessel (1) according to claim 2, **characterized in that** the peripheral rim (20) forms an angle α with a straight line perpendicular to the plate (2), the angle α being less than 45°, preferably less than 30° so that a free end of the peripheral rim (20) forms a tip (23) that is embedded in the sheet (3).

4. Cooking vessel (1) according to claim 3, **characterized in that** the free end of the peripheral rim (20) comprises an external edge (21), the curved part (30) comprising an external face (31) that extends directly from said external edge (21).

5. Cooking vessel (1) according to one of claims 1 to 4, **characterized in that** the peripheral edge (20) extends upwards from an upper face (14) of the plate (2) over a height H greater than 0.2 mm, preferably greater than 0.5 mm.

6. Cooking vessel (1) according to one of claims 1 to 5, **characterized in that** the plate (2) comprises a lower face (13) delimited by the peripheral rim (20) and that has a surface S1; and **in that** the bottom (4) comprises a flat upper face (32) for receiving food having a surface S2, the ratio S1/S2 being greater than 0.95, preferably greater than 0.98.

7. Cooking vessel (1) according to one of claims 1 to 6, **characterized in that** it is a skillet, a saucepan, a pan, a stewpot or a pressure cooker.
